# EUROPEAN PATENT APPLICATION

(11) **EP 4 290 935 A1**
(43) Date of publication of application: **13.12.2023**
(21) Application number: 22781380.5
(22) Date of filing: 08.02.2022
(51) Int. Cl.: H04W 48/16, H04W 48/18, H04W 60/00, H04W 88/02

(54) **ELECTRONIC DEVICE FOR PLMN SELECTION AND OPERATION METHOD THEREOF**

(30) Priority: 31.03.2021 KR 20210042216
(71) Applicant: Samsung Electronics Co., Ltd., Suwon-si, Gyeonggi-do 16677 (KR)
(72) Inventor: HONG, Byungho, Suwon-si Gyeonggi-do 16677 (KR); OH, Jungmin, Suwon-si Gyeonggi-do 16677 (KR); YOON, Sukkyung, Suwon-si Gyeonggi-do 16677 (KR); JUNG, Dongsuk, Suwon-si Gyeonggi-do 16677 (KR)
(74) Representative: Gulde & Partner
(86) International application number: PCT/KR2022/001897
(87) International publication number: WO 2022/211259

(57) **Abstract**

Various embodiments of the present invention relate to an apparatus and a method for PLMN selection in an electronic device. An electronic device may comprise a subscriber identification module, a wireless communication circuit, and a processor, wherein the processor: identifies information on a country where the electronic device is located; when the country where the electronic device is located is changed on the basis of the country where the electronic device is located, generates a PLMN list corresponding to the country where the electronic device is located; performs network search based on the PLMN list via the wireless communication circuit; and when a cell of a PLMN included in the PLMN list is detected through the network search, performs registration in the detected cell via the wireless communication circuit. Other embodiments may also be possible.

## Description

### [Technical Field]

Various embodiments of the disclosure relate to an apparatus and a method for selecting a public land mobile network (PLMN) in an electronic device.

### [Background Art]

In a mobile communication system, a public land mobile network (PLMN) may indicate identification information of a network operated by a communication service provider.

An electronic device may select a PLMN such that a mobile communication service is provided thereto. For example, the electronic device may identify a PLMN located near the electronic device through a network search based on a PLMN list. The electronic device may select a PLMN having a relatively high priority among PLMNs detected through a network search based on a PLMN list, thereby registering the location of the electronic device.

### [Disclosure]

### [Technical Problem]

An electronic device may attempt to register in a PLMN (or in the network of the PLMN) selected through a network search when the electronic device is supplied with power or is out of a shadow region. For example, the electronic device may conduct a network search based on a registered PLMN (RPLMN) of the electronic device when the electronic device is supplied with power or is out of a shadow region. If the result of network search shows that the MCC of the registered PLMN (RPLMN) of the electronic device is different from the MCC of the PLMN identified through the network search, the electronic device may identify a PLMN list corresponding to the MCC of the PLMN acquired through the network search from the subscriber identity module of the electronic device. If a top-rank PLMN having the highest priority among PLMNs included in the PLMN list is discovered through a network search, the electronic device may attempt to register in the top-rank PLMN.

If the top-rank PLMN having the highest priority among PLMNs included in the PLMN list is not discovered through a network search, the electronic device may perform a network search (for example, full band scan) with regard to all frequencies that can be supported by the electronic device. The electronic device may attempt to register in the having the highest priority among at least one PLMN discovered through the network search with regard to all frequencies that can be supported by the electronic device.

If information related to the PLMN stored in the subscriber identity module is different from information related to the PLMN of the network installed in the actual environment, the electronic device need to perform a network search (for example, full band scan) with regard to all frequencies that can be supported by the electronic device for the purpose of PLMN registration, and this may cause a time delay for PLMN selection.

Various embodiments of the disclosure provide an apparatus and a method for reducing the time delay for PLMN selection in an electronic device.

### [Technical Solution]

According to various embodiments, an electronic device may include a subscriber identity module, a wireless communication circuit, and a processor operatively connected to the subscriber identity module and the wireless communication circuit. The processor may be configured to identify information regarding a nation in which the electronic device is located, in case that the nation in which the electronic device is located is changed, based on the nation in which the electronic device is located, generate a public land mobile network (PLMN) list corresponding to the nation in which the electronic device is located, perform a network search based on the PLMN list through the wireless communication circuit, and in case that a cell of a PLMN included in the PLMN list is detected through the network search, access the detected cell through the wireless communication circuit.

According to various embodiments, a method for operating an electronic device may include identifying information regarding a nation in which the electronic device is located, in case that the nation in which the electronic device is located is changed, based on the nation in which the electronic device is located, generating a public land mobile network (PLMN) list corresponding to the nation in which the electronic device is located, performing a network search based on the PLMN list, and in case that a cell of a PLMN included in the PLMN list is detected through the network search, accessing the detected cell.

### [Advantageous Effects]

According to various embodiments of the disclosure, an electronic device may perform a network search based on a PLMN list corresponding to a changed nation of the electronic device, and if a cell of a PLMN included in the PLMN list is discovered through the network search, the electronic device may access the corresponding cell, thereby reducing the time delay for PLMN selection.

### [Description of Drawings]

FIG. 1 is a block diagram of an electronic device inside a network environment according to various embodiments.
FIG. 2 is a block diagram of an electronic device for PLMN selection according to various embodiments.
FIG. 3 is a flowchart for PLMN selection in an electronic device according to various embodiments.
FIG. 4 is a flowchart for identifying a registered PLMN in an electronic device according to various embodiments.
FIG. 5 is a flowchart for PLMN selection in an electronic device according to various embodiments, wherein the electronic device selects a PLMN based on the priority of a registered PLMN.
FIG. 6 illustrates an example for PLMN selection in an electronic device according to various embodiments.
FIG. 7 illustrates an example for PLMN selection in an electronic device according to various embodiments, wherein the electronic device selects a PLMN based on the priority of a registered PLMN.

### [Mode for Invention]

Hereinafter, various embodiments will be described in detail with reference to the accompanying drawings.

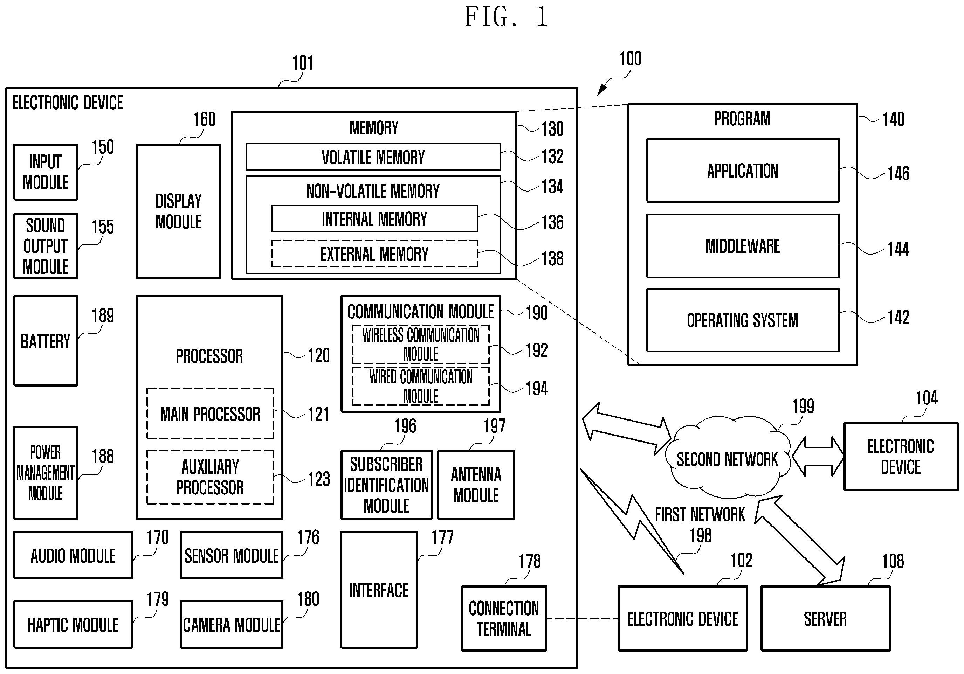

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (LTL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

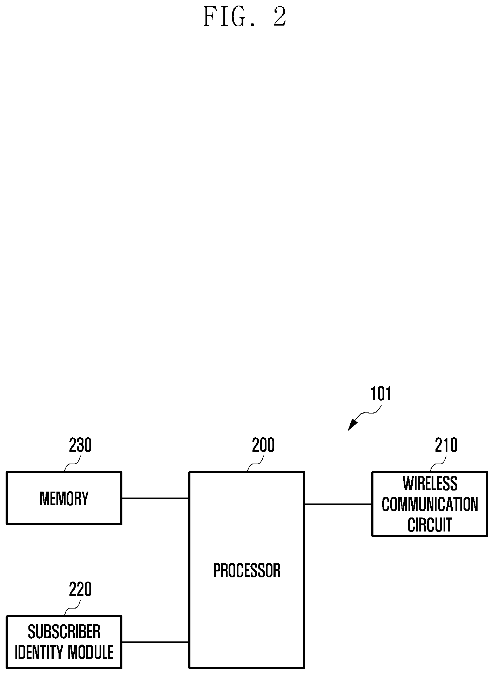

FIG. 2 is a block diagram of an electronic device for PLMN selection according to various embodiments. According to an embodiment, the electronic device 101 in FIG. 2 may be at least partially similar to the electronic device 101 in FIG. 1 or may further include other embodiments of the electronic device.

Referring to FIG. 2, according to various embodiments, the electronic device 101 may include a processor 200, a wireless communication circuit 210, a subscriber identity module (SIM) 220, and/or a memory 230. According to an embodiment, the processor 200 may be substantially identical to the processor 120 in FIG. 1, or may be included in the processor 120. The wireless communication circuit 210 may be substantially identical to the wireless communication module 192 in FIG. 1, or may be included in the wireless communication module 192. The SIM 220 may be substantially identical to the SIM 196 in FIG. 1, or may be included in the SIM 196. The memory 230 may be substantially identical to the memory 130 in FIG. 1, or may be included in the memory 130.

According to various embodiments, the processor 200 may control the wireless communication circuit 210, the SIM 220, and/or the memory 230 operatively connected thereto.

According to various embodiments, the processor 200 may perform a network search (or network discovery), based on information related to a registered PLMN (for example, registered public land mobile network (RPLMN)) of the electronic device 101. According to an embodiment, if the electronic device 101 is deemed to be supplied with power or is out of a shadow region, the processor 200 may acquire information related to a registered PLMN (for example, RPLMN) of the electronic device 101 from the SIM 220. The processor 200 may control the wireless communication circuit 210 so as to perform a network search based on information related to the registered PLMN (for example, RPLMN) of the electronic device 101. For example, the processor 200 may configure a frequency to be used for a network search based on information related to the registered PLMN (for example, RPLMN) of the electronic device 101. Upon detecting a cell (or network) satisfying a designated quality through a network search regarding a frequency configured based on information related to the registered PLMN (for example, RPLMN) of the electronic device 101, the processor 200 may acquire information related to the PLMN of the corresponding cell by using system information (for example, master information block (MIB) and/or system information block (SIB) 1). For example, the cell satisfying the designated quality may include a state in which the cell's field information exceeds a predefined reference value. As an example, the field information may include reference signals received power (RSRP), reference signals received quality (RSRQ), received signal code power (RSCP), and/or receiver signal strength indicator (RSSI). As an example, the registered PLMN may be information related to the PLMN in which the electronic device 101 was registered for the last time, and may include information related to a registered PLMN with regard to each network in which the electronic device 101 can register. As an example, the network in which the electronic device 101 can register may include a 2G network, a 3G network, a 4G network (for example, long-term evolution (LTE)), and/or a 5G network (for example, new radio (NR)).

According to various embodiments, if no registered PLMN of the electronic device 101 is discovered through a network search based on information related to the registered PLMN (for example, RPLMN) of the electronic device 101, the processor 200 may identify the mobile country code (MCC) of the service region (for example, nation) in which the electronic device 101 is located. As an example, the service region (for example, nation) may include an area in which the same communication service provider operates at least one cellular network. According to an embodiment, if the PLMN acquired through a network search based on information related to the registered PLMN (for example, RPLMN) of the electronic device 101 is different from the registered PLMN of the electronic device 101, the processor 200 may perform a network search related to the MCC. For example, upon detecting a cell that satisfies a designated quality through a network search related to the MCC, the processor 200 may detect MCC information from PLMN information of the corresponding cell. If MCC information of a cell detected through an MCC-related network search is different from the MCC of the registered PLMN of the electronic device 101, the processor 200 may determine that the nation in which the electronic device 101 is located is changed. As an example, the MCC-related network search may include a series of operations of performing a network search regarding a predefined frequency band in order to identify the MCC of the region in which the electronic device 101 is located.

According to an embodiment, if the PLMN acquired through a network search based on information related to the registered PLMN (for example, RPLMN) of the electronic device 101 is different from the registered PLMN of the electronic device 101, the processor 200 may identify the MCC of the service region (for example, nation) in which the electronic device 101 is located, acquired through the network search based on information related to the registered PLMN (for example, RPLMN). If MCC information of the service region (for example, nation) in which the electronic device 101 is located is different from the MCC of the registered PLMN, the processor 200 may determine that the nation in which the electronic device 101 is located is changed.

According to various embodiments, upon determining that the nation (or service region) in which the electronic device 101 is located is changed, the processor 200 may generate a PLMN list corresponding to the nation in which the electronic device 101 is located. According to an embodiment, upon determining that the nation in which the electronic device 101 is located is changed, the processor 200 may identify a user controlled PLMN (UPLMN) list and/or an operator controlled PLMN (OPLMN) list corresponding to the MCC of a cell detected through an MCC-related network search in the SIM 220. The processor 200 may generate a PLMN list corresponding to the nation (for example, MCC) in which the electronic device 101 is located, based on the UPLMN list and/or the OPLMN list corresponding to the MCC of the cell detected through the MCC-related network search.

According to various embodiments, the processor 200 may control the wireless communication circuit 210 so as to perform a network search based on the PLMN list corresponding to the nation (or service region) in which the electronic device 101 is located. For example, the network search based on the PLMN list corresponding to the nation in which the electronic device 101 is located may include a network search scheme of preferentially identifying whether a PLMN included in the PLMN list corresponding to the nation in which the electronic device 101 is located exists or not.

According to various embodiments, the processor 200 may perform an access procedure (or registration procedure) with a cell detected through a network search based on a PLMN list corresponding to the nation (or service region) in which the electronic device 101 is located. According to an embodiment, if the PLMN of a cell satisfying a designated quality detected through a network search is included in the PLMN list corresponding to the nation in which the electronic device 101 is located, the processor 200 may perform an access procedure with the corresponding cell. For example, the processor 200 may control the wireless communication circuit 210 so as to transmit an access request message (or registration request message) to the cell of the PLMN included in the PLMN list corresponding to the nation in which the electronic device 101 is located. Upon receiving an access grant message (or registration grant message) through the wireless communication circuit 210 in response to the access request message (or registration request message), the processor 200 may determine that an access (or registration) to the corresponding cell has been made.

According to various embodiments, if the PLMN of the cell accessed (or registered in) by the electronic device 101 is not the top-rank PLMN among PLMNs included in the PLMN list corresponding to the nation in which the electronic device 101 is located, the processor 200 may periodically perform a network search based on the PLMN list. According to an embodiment, upon detecting a PLMN included in the PLMN list corresponding to the nation in which the electronic device 101 is located, the PLMN having a relatively higher priority than the PLMN accessed (or registered in) by the electronic device 101, through a network search based on the PLMN list, the processor 200 may perform an access procedure (or registration procedure) with a cell of the PLMN having a relatively high priority. According to an embodiment, if the PLMN of the cell accessed (or registered in) by the electronic device 101 is the top-rank PLMN among PLMNs included in the PLMN list corresponding to the nation in which the electronic device 101 is located, the processor 200 may limit performing of the network search for detecting the top-rank PLMN.

According to various embodiments, the wireless communication circuit 210 may receive signals from an external device through antenna (not illustrated) or transmit signals to the outside. According to an embodiment, the wireless communication circuit 210 may include a radio frequency integrated circuit (RFIC) and a radio frequency front end (RFFE) for communication with the external device.

According to various embodiments, the SIM 220 may store subscriber identity information (for example, international mobile subscriber identity (IMSI)) and/or network configuration information for access, authentication, accounting, and/or security of a wireless network. As an example, the network configuration information may include at least one of information related to the registered PLMN (for example, RPLMN) of the electronic device 101, UPLMN list, or OPLMN list. According to an embodiment, the SIM 220 may be configured as an integrated circuit (IC) card and mounted in a slot of the electronic device 101. According to another embodiment, the SIM 220 may be configured as an embedded SIM (eSIM) (or embedded universal integrated circuit card (eUICC)) directly embedded in the electronic device 101. For example, when the SIM 220 is configured as an eSIM, the electronic device 101 may have information related to the SIM 220 stored in a secure chip disposed on the circuit board of the electronic device 101 through remote SIM provisioning during a process of manufacturing the electronic device 101.

According to various embodiments, the memory 230 may store various pieces of data used by at least one component (for example, the processor 200 or the wireless communication circuit 210) of the electronic device 101. According to an embodiment, the memory 230 may store various instructions which may be executed through the processor 200.

According to various embodiments, the processor 200 identify the nation in which the electronic device 101 is located, based on at least one of the global navigation satellite system (GNSS), telephone number, carrier portability code (CPC), international mobile equipment identity (IMEI), international mobile subscriber identity (IMSI), mobile network code (MNC), wireless fidelity (Wi-Fi), or data network (for example, IP address).

According to various embodiments, an electronic device (for example, the electronic device 101 in FIG. 1 or FIG. 2) may include a subscriber identity module (for example, the subscriber identity module 196 in FIG. 1 or the subscriber identity module 220 in FIG. 2), a wireless communication circuit (for example, the wireless communication circuit 192 in FIG. 1 or the wireless communication circuit 210 in FIG. 2), and a processor (for example, the processor 120 in FIG. 1 or the processor 200 in FIG. 2) operatively connected to the subscriber identity module and the wireless communication circuit. The processor may identify information regarding a nation in which the electronic device is located, in case that the nation in which the electronic device is located is changed, based on the nation in which the electronic device is located, generate a public land mobile network (PLMN) list corresponding to the nation in which the electronic device is located, perform a network search based on the PLMN list through the wireless communication circuit, and in case that a cell of a PLMN included in the PLMN list is detected through the network search, access (or register in) the detected cell through the wireless communication circuit.

According to various embodiments, the processor may identify information related to a registered PLMN (RPLMN) of the electronic device in the subscriber identity module, perform a network search based on the information related to the registered PLMN of the electronic device, and in case that a cell of the registered PLMN of the electronic device is not discovered through the network search based on the information related to the registered PLMN of the electronic device, identify the nation in which the electronic device is located.

According to various embodiments, the processor may identify the nation in which the electronic device is located, based on a mobile country code (MCC) acquired through a network search related to a predefined frequency band.

According to various embodiments, the processor may determine that the nation in which the electronic device is located has been changed in case that the MCC of the registered PLMN of the electronic device identified in the subscriber identity module is different from the MCC acquired through the network search.

According to various embodiments, the processor may identify information related to a user controlled PLMN (UPLMN) and/or information related to an operator controlled PLMN (OPLMN) corresponding to the MCC of the nation in which the electronic device is located in the subscriber identity module, and generate a PLMN list corresponding to the nation in which the electronic device is located, based on the information related to the UPLMN and/or the information related to the OPLMN.

According to various embodiments, the processor may identify a frequency related to at least one PLMN included in the PLMN list corresponding to the nation in which the electronic device is located, perform a network search based on the frequency related to at least one PLMN, in case that a cell satisfying a designated quality is detected through the network search based on the frequency related to at least one PLMN, identify the PLMN of the cell based on system information of the cell, and identify whether the PLMN of the cell is included in the PLMN list.

According to various embodiments, the processor may determine that the cell satisfies the designated quality in case that reference signals received power (RSRP), reference signals received quality (RSRQ), received signal code power (RSCP), and/or receiver signal strength indicator (RSSI) of the cell detected through the network search exceeds a reference value.

According to various embodiments, in case that the PLMN of the accessed (or registered-in) cell is not a top-rank PLMN included in the PLMN list, the processor may perform a network search related to the top-rank PLMN.

According to various embodiments, the processor may identify whether a predefined network search period arrives in case that the PLMN of the accessed (or registered-in) cell is not a top-rank PLMN included in the PLMN list, and perform a network search related to the top-rank PLMN in case that the predefined network search period arrives.

According to various embodiments, in case that a cell of a PLMN having a higher priority than the PLMN of the accessed (or registered-in) cell is detected through a network search related to the top-rank PLMN, the processor may access (or register in) the cell having a higher priority.

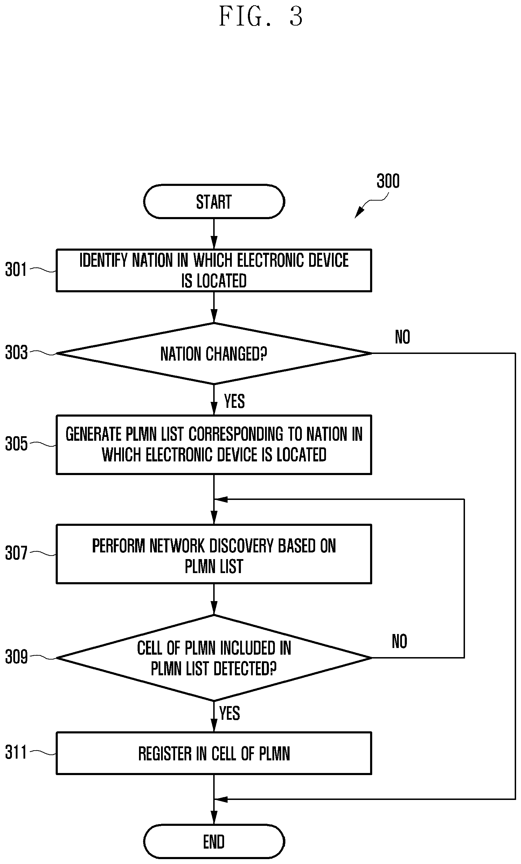

FIG. 3 is an example of a flowchart 300 for PLMN selection in an electronic device according to various embodiments. In following embodiments, operations may be performed successively, but are not necessarily performed successively. For example, the order of operations may be changed, and at least two operations may be performed in a parallel manner. As an example, the electronic device in FIG. 3 may be the electronic device 101 in FIG. 1 or FIG. 2.

Referring to FIG. 3, according to various embodiments, the electronic device (for example, the processor 120 in FIG. 1 or the processor 200 in FIG. 2) may identify the nation (or service region) in which the electronic device 101 is located, in operation 301. According to an embodiment, if a PLMN acquired through a network search based on information related to a registered PLMN (for example, RPLMN) of the electronic device 101 is different from the registered PLMN of the electronic device 101, the processor 200 may identify the nation in which the electronic device 101 is located through an MCC-related network search. For example, upon detecting a cell that satisfies a designated quality through an MCC-related network search, the processor 200 may detect MCC information from PLMN information of the corresponding cell. According to an embodiment, the processor 200 may identify the nation in which the electronic device 101 is located, based on at least one of GNSS, telephone number, CPC, IMSI, MNC, Wi-Fi, or data network (for example, IP address). According to an embodiment, if the PLMN acquired through a network search based on information related to the registered PLMN (for example, RPLMN) of the electronic device 101 is different from the registered PLMN of the electronic device 101, the processor 200 may identify the nation in which the electronic device 101 is located, based on an MCC acquired through a network search based on information related to the registered PLMN.

According to various embodiments, the electronic device (for example, the processor 120 or 200) may identify whether the nation (or service region) in which electronic device 101 is located has been changed, in operation 303. According to an embodiment, if MCC information of a cell detected through a network search is different from the MCC of the registered PLMN of the electronic device 101, the processor 200 may determine that the nation in which the electronic device 101 is located has been changed. According to an embodiment, if MCC information of a cell detected through an MCC-related network search is identical to the MCC of the registered PLMN of the electronic device 101, the processor 200 may determine that the nation in which the electronic device 101 is located has not been changed.

According to various embodiments, upon determining that the nation (or service region) in which the electronic device 101 is located has not been changed (for example, "No" in operation 303), the electronic device (for example, the processor 120 or 200) may end an embodiment for PLMN selection. According to an embodiment, upon determining that the nation in which the electronic device 101 is located has not been changed, the processor 200 may perform a network search based on information related to a home PLMN (for example, home PLMN (HPLMN)) stored in the SIM 220. For example, upon detecting a cell of the home PLMN through a network search based on information related to the home PLMN, the processor 200 may perform an access procedure (or registration procedure) with the cell of the home PLMN.

According to various embodiments, upon determining that the nation (or service region) in which the electronic device 101 is located has been changed (for example, "Yes" in operation 303), the electronic device (for example, the processor 120 or 200) may generate a PLMN list corresponding to the nation in which the electronic device 101 is located, in operation 305. According to an embodiment, upon determining that the nation in which the electronic device 101 is located has been changed, the processor 200 may identify a user controlled PLMN (UPLMN) list and/or an operator controlled PLMN (OPLMN) list corresponding to the MCC of a cell detected through an MCC-related network search in the SIM 220. The processor 200 may generate a PLMN list corresponding to the nation (for example, MCC) in which the electronic device 101 is located, based on the UPLMN list and/or OPLMN list identified in the SIM 220. For example, the UPLMN list may be stored in the SIM 220 in a format as in Table 1 (for example, 3rd generation partnership project (3GPP) technical specification (TS) 31.102).

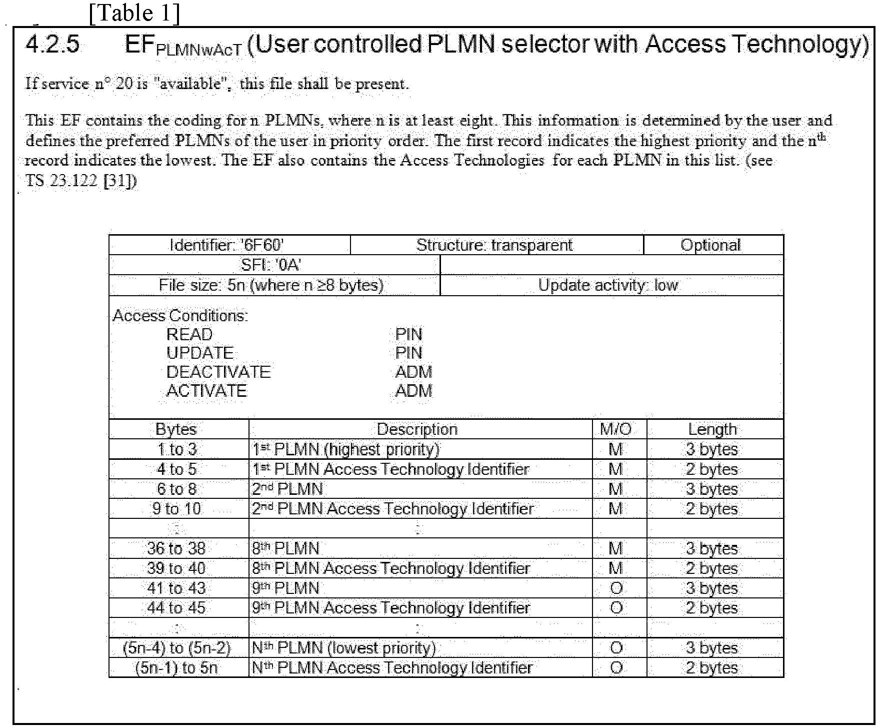

For example, the OPLMN list may be stored in the SIM 220 in a format as in Table 2 (for example, 3GPP TS 31.102).

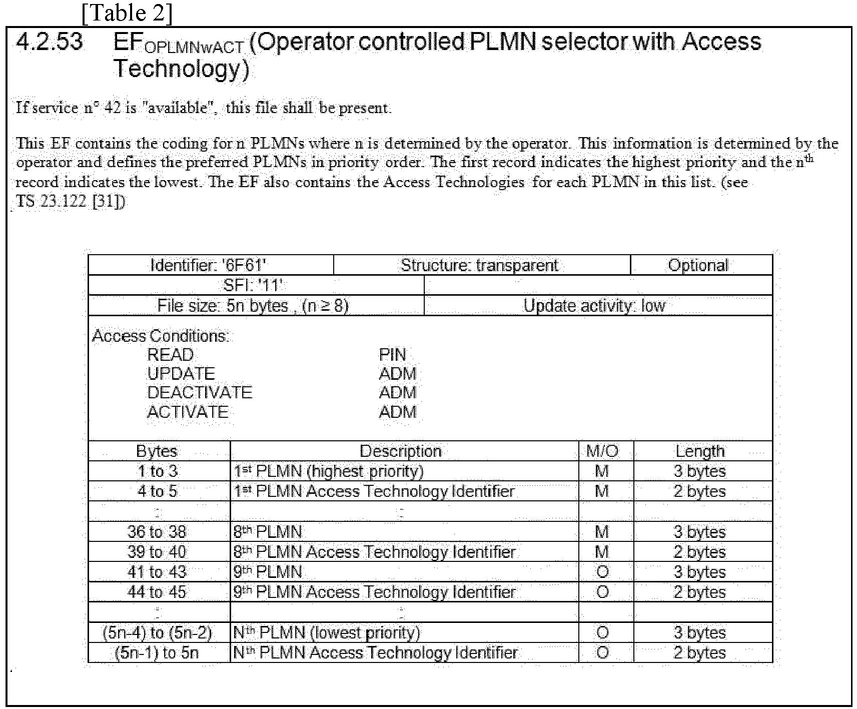

According to various embodiments, the electronic device (for example, the processor 120 or 200) may perform a network search based on the PLMN list corresponding to the nation (or service region) in which the electronic device 101 is located, in operation 307. According to an embodiment, the processor 200 may preferentially identify whether a PLMN exists, which is included in the PLMN list corresponding to the nation in which the electronic device 101 is located, through a network search based on the PLMN list corresponding to the nation in which the electronic device 101 is located. As an example, the network search based on the PLMN list corresponding to the nation in which the electronic device 101 is located may include a series of operations of identifying whether a cell exists, which uses a frequency (or frequency band) of a PLMN included in the PLMN list corresponding to the nation in which the electronic device 101 is located.

According to various embodiments, the electronic device (for example, the processor 120 or 200) may identify whether a cell of a PLMN included in the PLMN list is detected, through a network search based on the PLMN list corresponding to the nation (or service region) in which the electronic device 101 is located, in operation 309. According to an embodiment, the processor 200 may identify a frequency (or frequency band) of at least one PLMN included in the PLMN list corresponding to the nation in which the electronic device 101 is located. The processor 200 may identify whether a cell that satisfies a designated quality is detected through a network search based on the frequency (or frequency band) of at least one PLMN. Upon detecting a cell that satisfies a designated quality through a network search, the processor 200 may acquire information related to the PLMN of the corresponding cell by using system information (for example, MIB and/or SIB1) of the corresponding cell. For example, if the PLMN of the cell detected through a network search is included in the PLMN list corresponding to the nation in which the electronic device 101 is located, the processor 200 may determine detection of a cell of a PLMN included in the PLMN list corresponding to the nation in which the electronic device 101 is located. As another example, if the PLMN of the cell detected through a network search is not included in the PLMN list corresponding to the nation in which the electronic device 101 is located, the processor 200 may determine that no cell of a PLMN included in the PLMN list corresponding to the nation in which the electronic device 101 is located has been detected. As an example, a cell satisfying a designated quality may include a state in which the cell's field information exceeds a predefined reference value. As an example, the field information may include RSRP, RSRQ, RSCP, and/or RSSI.

According to various embodiments, upon detecting no cell of a PLMN included in the PLMN list through a network search based on the PLMN list corresponding to the nation (or service region) in which the electronic device 101 is located (for example, "No" in operation 309), the electronic device (for example, the processor 120 or 200) may perform a network search based on the PLMN list corresponding to the nation in which the electronic device 101 is located, in operation 307. According to an embodiment, if the PLMN of a cell that satisfying a designated quality detected through a network search is not included in the PLMN list corresponding to the nation in which the electronic device 101 is located, the processor 200 may identify whether another cell exists, which satisfies the designated quality, through a network search based on the PLMN list corresponding to the nation in which the electronic device 101 is located. Upon detecting another cell satisfying the designated quality, the processor 200 may identify whether the PLMN of another cell is included in the PLMN list corresponding to the nation in which the electronic device 101 is located.

According to various embodiments, upon detecting a cell of a PLMN included in the PLMN list through a network search based on the PLMN list corresponding to the nation (or service region) in which the electronic device 101 is located (for example, "Yes" in operation 309), the electronic device (for example, the processor 120 or 200) may access (or register in) the cell of the PLMN included in the PLMN list corresponding to the nation in which the electronic device 101 is located, in operation 311. According to an embodiment, upon detecting a cell of a PLMN included in the PLMN list through a network search based on the PLMN list corresponding to the nation in which the electronic device 101 is located, the processor 200 may camp on the cell of the PLMN included in the PLMN list corresponding to the nation in which the electronic device 101 is located. The processor 200 may control the wireless communication circuit 210 so as to transmit an access request message (or registration request message) to the camped-on cell. Upon receiving an access acceptance message (or registration acceptance message) in response to the access request message (or registration request message) through the wireless communication circuit 210, the processor 200 may determine completion of the access (or registration) to the camped-on cell.

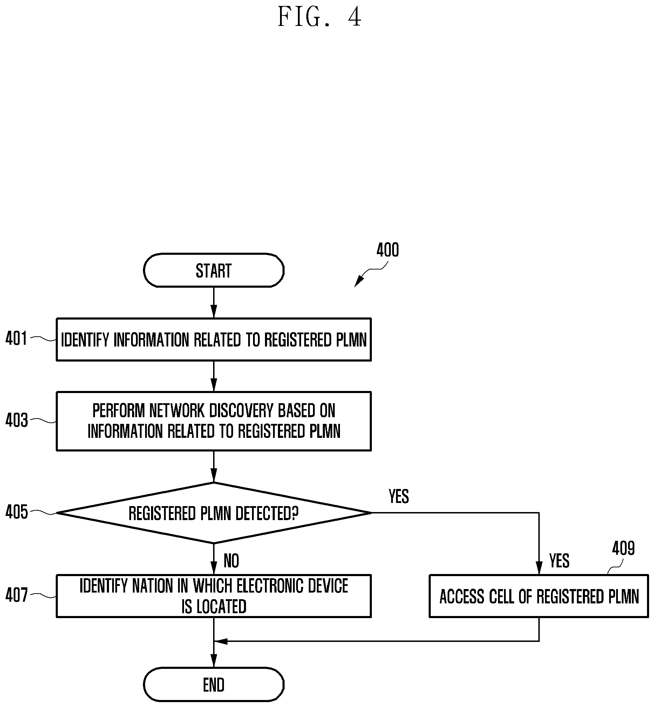

FIG. 4 is a flowchart 400 for identifying a registered PLMN in an electronic device according to various embodiments. According to an embodiment, operations in FIG. 4 may be detailed operations of operation 301 in FIG. 3. In following embodiments, operations may be performed successively, but are not necessarily performed successively. For example, the order of operations may be changed, and at least two operations may be performed in a parallel manner. As an example, the electronic device in FIG. 4 may be the electronic device 101 in FIG. 1 or FIG. 2.

Referring to FIG. 4, according to various embodiments, the electronic device (for example, the processor 120 in FIG. 1 or the processor 200 in FIG. 2) may identify information related to a registered PLMN of the electronic device 101 in operation 401. According to an embodiment, upon determining that the electronic device 101 is supplied with power or is out of a shadow region, the processor 200 may acquire information related to a registered PLMN (for example, RPLMN) of the electronic device 101 from the SIB 220.

According to an embodiment, the processor 200 may acquire MCC and MNC from location area information (LAI), routing area information (RAI), tracking area identity (TAI), and/or 5G TAI stored in an EF(elementary file)_LOCI(location information) field, an EF _PSLOCI (packet switched location information) field, an EF_EPSLOCI (evolved packet system location information) field, and/or an EF_5GS3GPPLOCI field of the SIM 220. The processor 200 may identify information related to the PLMN of the network in which the electronic device 101 has been registered, based on MCC and MNC acquired from the LAI, RAI, TAI, and/or 5G TAI. For example, the processor 200 may identify information related to the registered PLMN of the electronic device 101 in a 2G or 3G network, based on MCC and MNC acquired from the LAI and/or RAI stored in the EF _LOCI field and/or EF_PSLOCI field of the SIM 220. For example, the processor 200 may identify information related to the registered PLMN of the electronic device 101 in a 4G network (for example, LTE network), based on MCC and MNC acquired from the TAI stored in the EF_EPSLOCI field of the SIM 220. For example, the processor 200 may identify information related to the registered PLMN of the electronic device 101 in a 5G network (for example, NR network), based on MCC and MNC acquired from the 5G TAI stored in the EF 5GS3GPPLOCI field of the SIM 220.

According to an embodiment, the processor 200 may acquire information related to a registered PLMN (for example, RPLMN) of the electronic device 101, based on the priority of a network in which the electronic device 101 is to be registered. For example, if the electronic device 101 has been configured to be preferentially registered in a 5G network, the processor 200 may identify information related to the registered PLMN of the electronic device 101 in a 5G network (for example, NR network) based on MCC and MNC acquired from the 5G TAI stored in the EF_5GS3GPPLOCI field of the SIM 220. For example, if the electronic device 101 has been configured to be preferentially registered in a 4G network, the processor 200 may identify information related to the registered PLMN of the electronic device 101 in a 4G network (for example, LTE network) based on MCC and MNC acquired from the TAI stored in the EF_EPSLOCI field of the SIM 220.

According to various embodiments, the electronic device (for example, the processor 120 or 200) may perform a network search based on information related to the registered PLMN of the electronic device 101 in operation 403. According to an embodiment, the processor 200 may control the wireless communication circuit 210 so as to perform a network search based on information related to the registered PLMN (for example, RPLMN) of the electronic device 101. For example, the processor 200 may configure a frequency (or frequency band) to be used to perform a network search based on information (for example, frequency of the registered PLMN) related to the registered PLMN (for example, RPLMN) of the electronic device 101. Upon detecting a cell satisfying a designated quality through a network search regarding the frequency (or frequency band) configured based on information related to the registered PLMN (for example, RPLMN) of the electronic device 101, the processor 200 may acquire information related to the PLMN of the corresponding cell by using system information (for example, MIB and/or SIB1) of the cell that satisfies the designated quality.

According to various embodiments, the electronic device (for example, the processor 120 or 200) may identify whether a cell of a registered PLMN is detected through a network search based on information related to the registered PLMN of the electronic device 101 in operation 405. According to an embodiment, if the PLMN of a cell detected through a network search based on information related to the registered PLMN of the electronic device 101 is identical to the registered PLMN of the electronic device 101, the processor 200 may determine that a cell of the registered PLMN of the electronic device 101 has been detected. According to an embodiment, if the PLMN of a cell detected through a network search based on information related to the registered PLMN of the electronic device 101 is different from the registered PLMN of the electronic device 101, the processor 200 may determine that no cell of the registered PLMN of the electronic device 101 has been detected.

According to various embodiments, upon detecting no cell of the registered PLMN through a network search based on information related to the registered PLMN of the electronic device 101 ("No" in operation 405), the electronic device (for example, the processor 120 or 200) may identify the nation (or service region) in which the electronic device 101 is located, in operation 407. According to an embodiment, upon detecting no cell of the registered PLMN of the electronic device 101 through a network search based on information related to the registered PLMN (for example, RPLMN) of the electronic device 101, the processor 200 may identify the nation in which the electronic device 101 is located, through an MCC-related network search. For example, upon detecting a cell that satisfies a designated quality through an MCC-related network search, the processor 200 may detect MCC information from PLMN information of the corresponding cell. As an example, the MCC-related network search may include a series of operations of performing a network search regarding a predefined frequency band in order to identify the MCC of the region in which the electronic device 101 is located. According to an embodiment, upon detecting no cell of the registered PLMN of the electronic device 101 through a network search based on information related to the registered PLMN (for example, RPLMN) of the electronic device 101, the processor 200 may identify the nation in which the electronic device 101 is located, based on information related to MCC acquired through a network search based on information related to the registered PLMN.

According to various embodiments, upon detecting a cell of the registered PLMN through a network search based on information related to the registered PLMN of the electronic device 101 ("Yes" in operation 405), the electronic device (for example, the processor 120 or 200) may access (or register in) the cell of the registered PLMN of the electronic device 101 in operation 409. According to an embodiment, the processor 200 may control the wireless communication circuit 210 so as to transmit an access request message (or registration request message) to the cell of the registered PLMN of the electronic device 101. Upon receiving an access acceptance message (or registration acceptance message) in response to the access request message (or registration request message) through the wireless communication circuit 210, the processor 200 may determine completion of the access (or registration) to the cell of the registered PLMN of the electronic device 101.

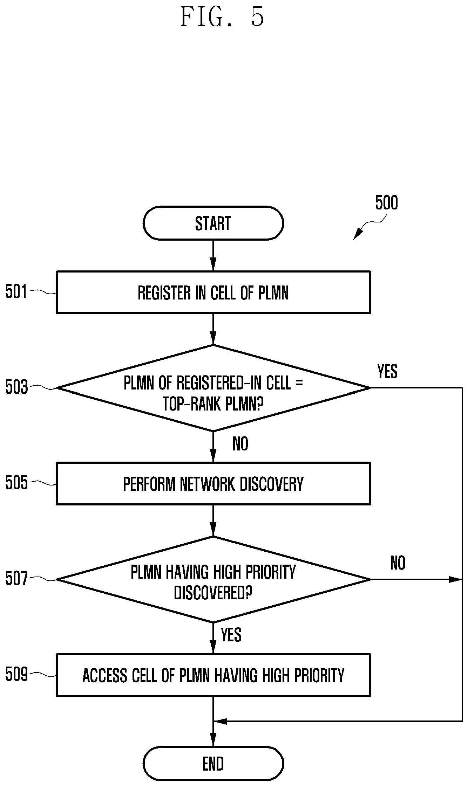

FIG. 5 is a flowchart for PLMN selection in an electronic device according to various embodiments, wherein the electronic device selects a PLMN based on the priority of a registered PLMN. In following embodiments, operations may be performed successively, but are not necessarily performed successively. For example, the order of operations may be changed, and at least two operations may be performed in a parallel manner. As an example, the electronic device in FIG. 5 may be the electronic device 101 in FIG. 1 or FIG. 2.

Referring to FIG. 5, according to various embodiments, the electronic device (for example, the processor 120 in FIG. 1 or the processor 200 in FIG. 2) may access (or register in) a cell of a PLMN included in a PLMN list corresponding to the nation (or service region) in which the electronic device 101 is located, based on the result of network search based on the PLMN list corresponding to the nation in which the electronic device 101 is located, in operation 501. According to an embodiment, upon detecting a cell of a PLMN included in the PLMN list corresponding to the nation in which the electronic device 101 is located, based on operation 301 to operation 311 in FIG. 3, the processor 200 may access the corresponding cell.

According to various embodiments, the electronic device (for example, the processor 120 or 200) may identify whether the PLMN of the cell which the electronic device 101 has accessed (or registered in) is the top-rank PLMN included in the PLMN list corresponding to the nation in which the electronic device 101 is located, in operation 503. According to an embodiment, the processor 200 may identify whether the PLMN of the cell which the electronic device 101 has accessed (or registered in) is the top-rank PLMN having the highest priority among PLMNs included in the PLMN list corresponding to the nation in which the electronic device 101 is located, in operation 501.

According to various embodiments, if the PLMN of the cell which the electronic device 101 has accessed (or registered in) is the top-rank PLMN included in the PLMN list corresponding to the nation in which the electronic device 101 is located (for example, "Yes" in operation 503), the electronic device (for example, the processor 120 or 200) may end an embodiment for PLMN selection. According to an embodiment, if the PLMN of the cell which the electronic device 101 has accessed (or registered in) is the top-rank PLMN among PLMNs included in the PLMN list corresponding to the nation in which the electronic device 101 is located, the processor 200 may determine that the electronic device 101 has accessed (or registered in) a cell of the PLMN having the highest priority. In this case, there is no PLMN having a relatively higher priority than the PLMN of the cell which the electronic device 101 has accessed (or registered in), and the processor 200 may thus limit performing of a network search for detecting the top-rank PLMN.

According to various embodiments, if the PLMN of the cell which the electronic device 101 has accessed (or registered in) is not the top-rank PLMN included in the PLMN list corresponding to the nation in which the electronic device 101 is located (for example, "No" in operation 503), the electronic device (for example, the processor 120 or 200) may perform a network search for detecting the top-rank PLMN in operation 505. According to an embodiment, if a period predefined for network search arrives, the processor 200 may control the wireless communication circuit 210 so as to perform a network search (for example, full band scan) with regard to all frequencies (or frequency bands) that can be supported by the electronic device 101.

According to various embodiments, the electronic device (for example, the processor 120 or 200) may identify whether a cell of a PLMN having a higher priority than the cell which the electronic device 101 has accessed (or registered in) has been detected through a network search, in operation 507.

According to various embodiments, upon detecting no cell of a PLMN having a higher priority than the cell which the electronic device 101 has accessed (or registered in) through a network search (for example, "No" in operation 507), the electronic device (for example, the processor 120 or 200) may end an embodiment for PLMN selection.

According to various embodiments, upon detecting a cell of a PLMN having a higher priority than the cell which the electronic device 101 has accessed (or registered in) through a network search (for example, "Yes" in operation 507), the electronic device (for example, the processor 120 or 200) may access (or register in) the cell detected through the network search, in operation 509.

According to various embodiments, if the PLMN of the cell which the electronic device 101 has accessed (or registered in), based on the result of a network search for detecting the top-rank PLMN, is not the top-rank PLMN included in the PLMN list corresponding to the nation in which the electronic device 101 is located, the electronic device 101 may perform a network search for detecting the top-rank PLMN. According to an embodiment, if the PLMN of the cell which the electronic device 101 has accessed (or registered in) is not the top-rank PLMN included in the PLMN list corresponding to the nation in which the electronic device 101 is located, the processor 200 may identify whether a period predefined for network search arrives, in operation 509. If the period predefined for network search arrives, the processor 200 may perform a network search for detecting the top-rank PLMN.

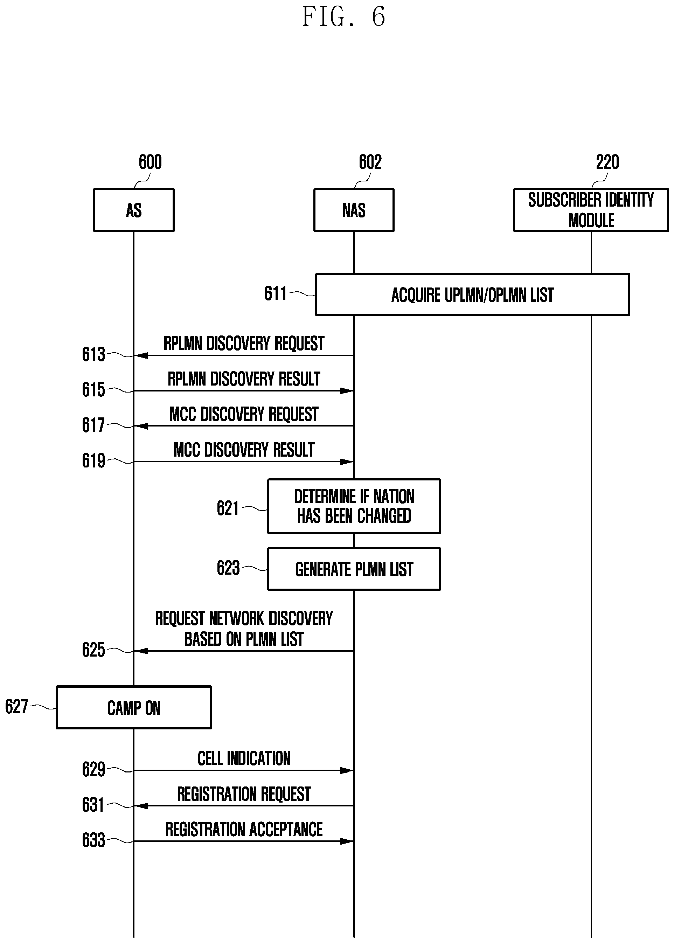

FIG. 6 illustrates an example for PLMN selection in an electronic device according to various embodiments.

Referring to FIG. 6, according to various embodiments, the non-access stratum (NAS) 602 of the electronic device 101 may acquire a UPLMN list and/or an OPLMN list from the SIM 220 (operation 611). According to an embodiment, if the electronic device 101 is deemed to be supplied with power or to be out of a shadow region, the NAS 602 may retrieve information related to the UPLMN list and/or the OPLMN list stored in the SIM 220. As an example, PLMNs included in the UPLMN list and/or the OPLMN list may be sorted based on priority.

According to various embodiments, the NAS 602 of the electronic device 101 may transmit a message for requesting a network search based on a registered PLMN of the electronic device 101 to the access stratum (AS) 600 of the electronic device 101 (operation 613).

According to various embodiments, the AS 600 of the electronic device 101 may perform a network search based on the registered PLMN of the electronic device 101, based on the request for network search based on the registered PLMN of the electronic device 101, received from the NAS 602. According to an embodiment, the AS 600 may identify a frequency (or frequency band) to be used for network search from information (for example, frequency of the registered PLMN) related to the registered PLMN (for example, RPLMN) of the electronic device 101 received from the NAS 602. Upon detecting a cell satisfying a designated quality through a network search regarding the frequency (or frequency band) identified from the information related to the registered PLMN (for example, RPLMN) of the electronic device 101, the AS 600 may acquire information related to the PLMN of the corresponding cell by using system information (for example, MIB and/or SIB1) of the cell that satisfies the designated quality.

According to various embodiments, upon completing a network search based on the registered PLMN of the electronic device 101, the AS 600 of the electronic device 101 may transmit the result of network search based on the registered PLMN of the electronic device 101 to the NAS 602 (operation 615).

According to various embodiments, the NAS 602 of the electronic device 101 may identify whether a cell of the registered PLMN of the electronic device 101 is detected, based on the result of network search based on the registered PLMN of the electronic device 101, received from the AS 600. According to an embodiment, if the PLMN of the cell detected through the network search based on the registered PLMN of the electronic device 101 is different from the registered PLMN of the electronic device 101, the NAS 602 may determine that no cell of the registered PLMN of the electronic device 101 has been detected. According to an embodiment, if the PLMN of the cell detected through the network search based on the registered PLMN of the electronic device 101 is identical to the registered PLMN of the electronic device 101, the NAS 602 may determine that a cell of the registered PLMN of the electronic device 101 has been detected.

According to various embodiments, upon determining that no cell of the registered PLMN of the electronic device 101 has been detected through the network search based on the registered PLMN of the electronic device 101, the NAS 602 of the electronic device 101 may transmit a message form requesting an MCC-related network search to the access stratum (AS) 600 of the electronic device 101 (operation 617).

According to various embodiments, the AS 600 of the electronic device 101 may perform an MCC-related network search, based on the request for MCC-related network search received from the NAS 602. According to an embodiment, the AS 600 may identify a predefined frequency band in order to identify the MCC of the region in which the electronic device 101 is located, based on the request for MCC-related network search received from the NAS 602. Upon detecting a cell satisfying a designated quality through the MCC-related network search, the AS 600 may detect MCC information from PLMN information of the cell that satisfies the designated quality.

According to various embodiments, upon completing the MCC-related network search, the AS 600 of the electronic device 101 may transmit the result of MCC-related network search to the NAS 602 (operation 619).

According to various embodiments, the NAS 602 of the electronic device 101 may identify whether the nation in which the electronic device 101 is located has been changed, based on the result of MCC-related network search received from the AS 600 (operation 621). According to an embodiment, if MCC information of the cell detected through the MCC-related network search is different from the MCC of the registered PLMN of the electronic device 101, the NAS 602 may determine that the nation in which the electronic device 101 is located has been changed. According to an embodiment, if MCC information of the cell detected through the MCC-related network search is identical to the MCC of the registered PLMN of the electronic device 101, the NAS 602 may determine that the nation in which the electronic device 101 is located has not been changed.

According to various embodiments, upon determining that the nation in which the electronic device 101 is located has been changed (operation 621), the NAS 602 of the electronic device 101 may generate a PLMN list corresponding to the nation in which the electronic device 101 is located (operation 623). According to an embodiment, upon determining that the nation in which the electronic device 101 is located has been changed, the NAS 602 may identify an UPLMN list and/or an OPLMN list corresponding to the nation (for example, MCC) in which the electronic device 101 is located, in the SIM 220. The NAS 602 may generate a PLMN list corresponding to the nation (for example, MCC) in which the electronic device 101 is located, based on the UPLMN list and/or the OPLMN list identified in the SIM 220.

According to various embodiments, the NAS 602 of the electronic device 101 may transmit a message for requesting a network search based on the PLMN list corresponding to the nation in which the electronic device 101 is located, to the AS 600 of the electronic device 101 (operation 625). According to an embodiment, the PLMN list corresponding to the nation (for example, MCC) in which the electronic device 101 is located may be configured as in Table 3 below:

**Table 3**

| |
|---|
| OPlmn List[0] : 310160 , AccTech: LTE + UMTS + GSM (0xc0c0) |
| OPlmn List[1] : 310200 , AccTech: LTE + UMTS + GSM (0xc0c0) |
| OPlmn List[2] : 310210 , AccTech: LTE + UMTS + GSM (0xc0c0) |
| OPlmn List[3] : 310220 , AccTech: LTE + UMTS + GSM (0xc0c0) |
| OPlmn List[4] : 310230 , AccTech: LTE + UMTS + GSM (0xc0c0) |
| OPlmn List[5] : 310240 , AccTech: LTE + UMTS + GSM (0xc0c0) |
| OPlmn List[6] : 310250 , AccTech: LTE + UMTS + GSM (0xc0c0) |
| OPlmn List[7] : 310260 , AccTech: LTE + UMTS + GSM (0xc0c0) |
| OPlmn List[8] : 310270 , AccTech: LTE + UMTS + GSM (0xc0c0) |
| OPlmn List[9] : 310310 , AccTech: LTE + UMTS + GSM (0xc0c0) |
| OPlmn List[10] : 310490 , AccTech: LTE + UMTS + GSM (0xc0c0) |
| OPlmn List[11] : 310580 , AccTech: LTE + UMTS + GSM (0xc0c0) |
| OPlmn List[12] : 310660 , AccTech: LTE + UMTS + GSM (0xc0c0) |
| OPlmn List[13] : 310800 , AccTech: LTE + UMTS + GSM (0xc0c0) |

According to various embodiments, the AS 600 of the electronic device 101 may perform a network search based on the PLMN list corresponding to the nation in which the electronic device 101 is located, based on the request for network search based on the PLMN list corresponding to the nation in which the electronic device 101 is located, received from the NAS 602. According to an embodiment, the AS 600 may preferentially identify whether a PLMN exists, which is included in the PLMN list corresponding to the nation in which the electronic device 101 is located, through a network search based on the PLMN list corresponding to the nation in which the electronic device 101 is located.

According to various embodiments, upon detecting a cell of a PLMN included in the PLMN list through a network search based on the PLMN list corresponding to the nation in which the electronic device 101 is located, the AS 600 of the electronic device 101 may camp on the corresponding cell (operation 627). According to an embodiment, upon detecting a cell of a PLMN included in the PLMN list through a network search based on the PLMN list corresponding to the nation in which the electronic device 101 is located, the AS 600 may acquire information related to the PLMN of the corresponding cell by using system information (for example, MIB and/or SIB 1) of the corresponding cell. For example, if the PLMN (for example, 310410) of a cell satisfying a designated quality detected through a network search is not included in the PLMN list corresponding to the nation in which the electronic device 101 is located, the AS 600 may perform a network search based on the PLMN list corresponding to the nation in which the electronic device 101 is located. For example, if the PLMN (for example, 310 260) of a cell satisfying a designated quality detected through a network search is included in the PLMN list corresponding to the nation in which the electronic device 101 is located, the AS 600 may camp on the cell of the PLMN (for example, 310 260) included in the PLMN list corresponding to the nation in which the electronic device 101 is located. As an example, if the PLMN (for example, 310 260) of a cell satisfying a designated quality detected through a network search, regardless of the priority of PLMNs included in the PLMN list corresponding to the nation in which the electronic device 101 is located, is included in the PLMN list corresponding to the nation in which the electronic device 101 is located, the AS 600 may camp on the corresponding cell.

According to various embodiments, the AS 600 of the electronic device 101 may transmit information (for example, cell indication) related to the camped-on cell to the NAS 602 (operation 629).

According to various embodiments, the NAS 602 of the electronic device 101 may attempt to access (or register in) the camped-on cell, based on information related to the camped-on cell received from the AS 600. According to an embodiment, the NAS 602 may transmit a message for requesting access to (or registration in) the cell, which has been camped-on through the AS 600, to the AS 600 (operation 631). The AS 600 may transmit an access request message (or registration request message) to the camped-on cell, based on the request for access to (or registration in) the camped-on cell, received from the NAS 602. According to an embodiment, upon receiving an access acceptance message (or registration acceptance message) from the camped-on cell in response to the access request message (or registration request message), the AS 600 may transmit information related to access acceptance (or registration acceptance) to the NAS 602 (operation 633). The NAS 602 may determine that access to (or registration in) the cell is completed, based on the information related to access acceptance (or registration acceptance) received from the AS 600.

According to various embodiments, the NAS 602 of the electronic device 101 may identify whether the nation in which the electronic device 101 is located has been changed, based on the result of network search based on the registered PLMN of the electronic device 101 received from the AS 600. According to an embodiment, if MCC information of a cell detected through a network search based on the registered PLMN of the electronic device 101 is different from the MCC of the registered PLMN of the electronic device 101, the NAS 602 may determine that the nation in which the electronic device 101 is located has been changed. According to an embodiment, if MCC information of a cell detected through a network search based on the registered PLMN of the electronic device 101 is identical to the MCC of the registered PLMN of the electronic device 101, the NAS 602 may determine that the nation in which the electronic device 101 is located has not been changed.

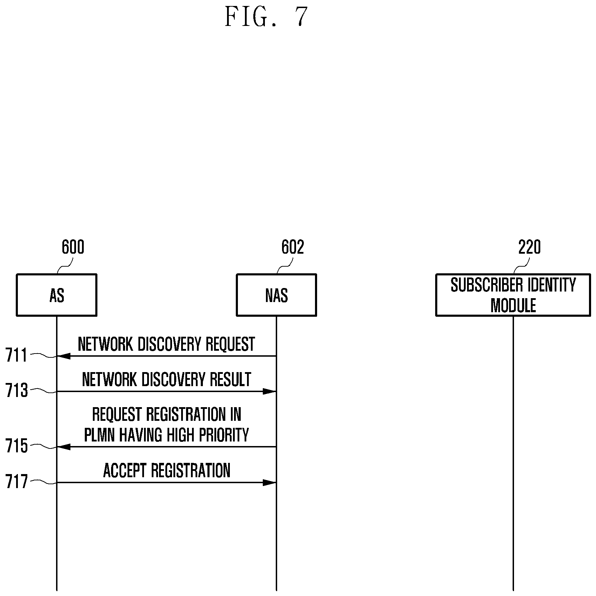

FIG. 7 illustrates an example for PLMN selection in an electronic device according to various embodiments, wherein the electronic device selects a PLMN based on the priority of a registered PLMN.

Referring to FIG. 7, according to various embodiments, upon accessing (or registering in) a cell detected through a network search based on a PLMN list corresponding to the nation in which the electronic device 101 is located (for example, operation 633 in FIG. 6), the NAS 602 of the electronic device 101 may identify whether the PLMN of the cell which the electronic device 101 has accessed (or registered in) is the top-rank PLMN included in the PLMN list corresponding to the nation in which the electronic device 101 is located.

According to various embodiments, if the PLMN of the cell which the electronic device 101 has accessed (or registered in) is not the top-rank PLMN included in the PLMN list corresponding to the nation in which the electronic device 101 is located, the NAS 602 of the electronic device 101 may transmit a message for requesting a network search for detecting the top-rank PLMN to the AS 600 (operation 711).

According to various embodiments, the AS 600 of the electronic device 101 may perform a network search for detecting the top-rank PLMN, based on the request for network search from the NAS 602. According to an embodiment, if a period predefined for network search arrives, the AS 600 perform a network search (for example, full band scan) with regard to all frequencies (or frequency bands) that can be supported by the electronic device 101.

According to various embodiments, upon completing the network search for detecting the top-rank PLMN, the AS 600 of the electronic device 101 may transmit the result of network search to the NAS 602 (operation 713).

According to various embodiments, the NAS 602 of the electronic device 101 may identify whether a cell of a PLMN having a higher priority than the PLMN of the cell which the electronic device 101 has accessed (or registered in), among PLMNs included in the PLMN list corresponding to the nation in which the electronic device 101 is located, is detected, based on the result of network search received from the AS 600.

According to various embodiments, upon detecting a cell of a PLMN having a higher priority than the PLMN of the cell which the electronic device 101 has accessed (or registered in), the NAS 602 of the electronic device 101 may attempt to access (or register in) the cell of the PLMN having a relatively high priority. According to an embodiment, the NAS 602 may transmit a message for requesting access to (or registration in) the cell of the PLMN having a higher priority than the PLMN of the cell which the electronic device 101 has accessed (or registered in), to the AS 600 (operation 715). Based on the request for registration in the cell of the PLMN having a relatively high priority received from the NAS 602, the AS 600 may transmit an access (or registration) request message to the corresponding cell. According to an embodiment, upon receiving an access (or registration) acceptance message in response to the access (or registration) request message, the AS 600 may transmit information related to access (or registration) acceptance to the NAS 602 (operation 717). Based on the information related to access (or registration) acceptance received from the AS 600, the NAS 602 may determine completion of access to (or registration in) the cell of the PLMN having a higher priority than the PLMN of the cell which the electronic device 101 has accessed (or registered in).

According to various embodiments, a method for operating an electronic device (for example, the electronic device 101 in FIG. 1 or FIG. 2) may include an operation of identifying information regarding a nation in which the electronic device is located, an operation of, in case that the nation in which the electronic device is located is changed, based on the nation in which the electronic device is located, generating a public land mobile network (PLMN) list corresponding to the nation in which the electronic device is located, an operation of performing a network search based on the PLMN list through the wireless communication circuit, and an operation of, in case that a cell of a PLMN included in the PLMN list is detected through the network search, accessing (or registering in) the detected cell.

According to various embodiments, the operation of identifying information regarding a nation may include an operation of identifying information related to a registered PLMN (RPLMN) of the electronic device in a subscriber identity module (for example, the subscriber identity module 196 in FIG. 1 or the subscriber identity module 220 in FIG. 2) of the electronic device, an operation of performing a network search based on the information related to the registered PLMN of the electronic device, and an operation of, in case that a cell of the registered PLMN of the electronic device is not discovered through the network search based on the information related to the registered PLMN of the electronic device, identifying the nation in which the electronic device is located.

According to various embodiments, the operation of identifying information regarding a nation may include an operation of identifying the nation in which the electronic device is located, based on a mobile country code (MCC) acquired through a network search related to a predefined frequency band.

According to various embodiments, the method may further include an operation of comparing the MCC of the registered PLMN of the electronic device identified in the subscriber identity module of the electronic device with the MCC acquired through the network search, and an operation of determining that the nation in which the electronic device is located has been changed in case that the MCC of the registered PLMN of the electronic device identified in the subscriber identity module of the electronic device is different from the MCC acquired through the network search.

According to various embodiments, the operation of generating the PLMN list may include an operation of identifying information related to a user controlled PLMN (UPLMN) and/or information related to an operator controlled PLMN (OPLMN) corresponding to the MCC of the nation in which the electronic device is located in the subscriber identity module of the electronic device, and an operation of generating a PLMN list corresponding to the nation in which the electronic device is located, based on the information related to the UPLMN and/or the information related to the OPLMN.

According to various embodiments, the method may further include an operation of identifying a frequency related to at least one PLMN included in the PLMN list corresponding to the nation in which the electronic device is located, an operation of performing a network search based on the frequency related to at least one PLMN, an operation of, in case that a cell satisfying a designated quality is detected through the network search based on the frequency related to at least one PLMN, identifying the PLMN of the cell based on system information of the cell, and an operation of identifying whether the PLMN of the cell is included in the PLMN list.

According to various embodiments, the method may further include an operation of determining that the cell satisfies the designated quality in case that reference signals received power (RSRP), reference signals received quality (RSRQ), received signal code power (RSCP), and/or receiver signal strength indicator (RSSI) of the cell detected through the network search exceeds a reference value.

According to various embodiments, the method may further include an operation of, in case that the PLMN of the accessed (or registered) cell is not a top-rank PLMN included in the PLMN list, performing a network search related to the top-rank PLMN.

According to various embodiments, the operation of performing a network search related to the top-rank PLMN may include an operation of identifying whether a predefined network search period arrives in case that the PLMN of the accessed (or registered) cell is not a top-rank PLMN included in the PLMN list, and an operation of performing a network search related to the top-rank PLMN in case that the predefined network search period arrives.

According to various embodiments, the method may further include an operation of, in case that a cell of a PLMN having a higher priority than the PLMN of the accessed (or registered) cell is detected through a network search related to the top-rank PLMN, accessing (or registering in) the cell having a higher priority.

Embodiments of the disclosure provided in the specification and the drawings are only specific examples presented to easily describe technical content according to embodiments of the disclosure and to help understanding of embodiments of the disclosure, and are not intended to limit the scope of embodiments of the disclosure. Therefore, the scope of various embodiments of the disclosure is to be interpreted as encompassing not only embodiments disclosed herein, but also all changed or modified forms derived based on the technical idea of various embodiments of the disclosure.

## Claims

1. An electronic device comprising:
a subscriber identity module;
a wireless communication circuit; and
a processor operatively connected to the subscriber identity module and the wireless communication circuit,
wherein the processor is configured to:
identify information regarding a nation in which the electronic device is located;
in case that the nation in which the electronic device is located is changed, based on the nation in which the electronic device is located, generate a public land mobile network (PLMN) list corresponding to the nation in which the electronic device is located;
perform a network search based on the PLMN list through the wireless communication circuit; and
in case that a cell of a PLMN included in the PLMN list is detected through the network search, access the detected cell through the wireless communication circuit.

2. The electronic device of claim 1, wherein the processor is configured to:
identify information related to a registered PLMN (RPLMN) of the electronic device in the subscriber identity module;
perform a network search based on the information related to the registered PLMN of the electronic device; and
in case that a cell of the registered PLMN of the electronic device is not discovered through the network search based on the information related to the registered PLMN of the electronic device, identify the nation in which the electronic device is located.

3. The electronic device of claim 1, wherein the processor is configured to identify the nation in which the electronic device is located, based on a mobile country code (MCC) acquired through a network search related to a predefined frequency band.

4. The electronic device of claim 3, wherein the processor is configured to determine that the nation in which the electronic device is located has been changed in case that the MCC of the registered PLMN of the electronic device identified in the subscriber identity module is different from the MCC acquired through the network search.

5. The electronic device of claim 1, wherein the processor is configured to:
identify information related to a user controlled PLMN (UPLMN) and/or information related to an operator controlled PLMN (OPLMN) corresponding to the MCC of the nation in which the electronic device is located in the subscriber identity module; and
generate a PLMN list corresponding to the nation in which the electronic device is located, based on the information related to the UPLMN and/or the information related to the OPLMN.

6. The electronic device of claim 1, wherein the processor is configured to:
identify a frequency related to at least one PLMN included in the PLMN list corresponding to the nation in which the electronic device is located;
perform a network search based on the frequency related to at least one PLMN;
in case that a cell satisfying a designated quality is detected through the network search based on the frequency related to at least one PLMN, identify the PLMN of the cell based on system information of the cell; and
identify whether the PLMN of the cell is included in the PLMN list.

7. The electronic device of claim 6, wherein the processor is configured to determine that the cell satisfies the designated quality in case that reference signals received power (RSRP), reference signals received quality (RSRQ), received signal code power (RSCP), and/or receiver signal strength indicator (RSSI) of the cell detected through the network search exceeds a reference value.

8. The electronic device of claim 1, wherein the processor is configured to, in case that the PLMN of the accessed cell is not a top-rank PLMN included in the PLMN list, perform a network search related to the top-rank PLMN.

9. The electronic device of claim 8, wherein the processor is configured to:
identify whether a predefined network search period arrives in case that the PLMN of the accessed cell is not a top-rank PLMN included in the PLMN list; and
perform a network search related to the top-rank PLMN in case that the predefined network search period arrives.

10. The electronic device of claim 8, wherein the processor is configured to, in case that a cell of a PLMN having a higher priority than the PLMN of the accessed cell is detected through a network search related to the top-rank PLMN, access the cell having a higher priority.

11. A method for operating an electronic device, the method comprising:
identifying information regarding a nation in which the electronic device is located;
in case that the nation in which the electronic device is located is changed, based on the nation in which the electronic device is located, generating a public land mobile network (PLMN) list corresponding to the nation in which the electronic device is located;
performing a network search based on the PLMN list; and
in case that a cell of a PLMN included in the PLMN list is detected through the network search, accessing the detected cell.

12. The method of claim 11, wherein the identifying of information regarding a nation comprises:
identifying information related to a registered PLMN (RPLMN) of the electronic device in a subscriber identity module of the electronic device;
performing a network search based on the information related to the registered PLMN of the electronic device; and
in case that a cell of the registered PLMN of the electronic device is not discovered through the network search based on the information related to the registered PLMN of the electronic device, identifying the nation in which the electronic device is located.

13. The method of claim 11, wherein the identifying of information regarding a nation comprises identifying the nation in which the electronic device is located, based on a mobile country code (MCC) acquired through a network search related to a predefined frequency band.

14. The method of claim 11, wherein the generating of a PLMN list comprises:
identifying information related to a user controlled PLMN (UPLMN) and/or information related to an operator controlled PLMN (OPLMN) corresponding to the MCC of the nation in which the electronic device is located in the subscriber identity module of the electronic device; and
generating a PLMN list corresponding to the nation in which the electronic device is located, based on the information related to the UPLMN and/or the information related to the OPLMN.

15. The method of claim 11, further comprising:
identifying a frequency related to at least one PLMN included in the PLMN list corresponding to the nation in which the electronic device is located;
performing a network search based on the frequency related to at least one PLMN;
in case that a cell satisfying a designated quality is detected through the network search based on the frequency related to at least one PLMN, identifying the PLMN of the cell based on system information of the cell; and
identifying whether the PLMN of the cell is included in the PLMN list.
